# NEUE EUROPÄISCHE PATENTSCHRIFT

(11) **EP 1 907 720 B2**
(45) Veröffentlichungstag und Bekanntmachung des Hinweises auf die Entscheidung über den Einspruch: **23.12.2015**
(45) Hinweis auf die Patenterteilung: 04.01.2012
(21) Anmeldenummer: 06762409.8
(22) Anmeldetag: 05.07.2006
(51) Int. Cl.: F16D 23/06

(54) **SYNCHRONRINGPAKET**
SYNCHRONIZER RING ASSEMBLY
SYSTEME DE SYNCHRONISME A BAGUE DE SYNCHRONISATION

(30) Priorität: 28.07.2005 DE 102005035941
(43) Veröffentlichungstag der Anmeldung: 09.04.2008
(73) Patentinhaber: Diehl Metall Stiftung & Co. KG, 90552 Röthenbach (DE)
(72) Erfinder: HOLDERIED, Meinrad, 91338 Igensdorf (DE); GEBHARD, Friedrich, 91207 Lauf/Peg (DE); DÖRNHÖFER, Martin, 91245 Simmelsdorf (DE); RAIMUND, Karl, 91220 Schnaittach (DE)
(74) Vertreter: Diehl Patentabteilung
(86) Internationale Anmeldenummer: PCT/EP2006/006538
(87) Internationale Veröffentlichungsnummer: WO 2007/012386

(56) Entgegenhaltungen:
- EP-A- 0 821 175
- EP-A- 1 429 044
- EP-B1- 0 716 247
- DE-A1- 2 718 495
- DE-A1- 3 735 978
- DE-A1- 10 163 828
- DE-A1- 10 212 489
- DE-B3- 10 334 844
- DE-C1- 19 837 583
- DE-C1- 19 982 494
- FR-A- 2 101 727
- GB-B- 2 391 592
- US-A- 4 679 681
- US-A- 5 582 281
- Zwischenringe für Mehrkonus-Synchronisationen - Automobil Produkt Information API 06 - Firmenveröffentlichung der INA-Schaeffler KG (veröffentlicht am 01.11.2002)
- G. LECHNER ET AL.: 'Fahrzeuggetriebe: Grundlagen, Auswahl, Auslegung und Konstruktion', 1994, SPRINGER VERLAG, BERLIN - HEIDELBERG - NEW YORK Seiten 247 - 257

## Beschreibung

Die Erfindung betrifft ein Synchronringpaket für Schaltgetriebe gemäß dem Oberbegriff des Anspruchs 1.

Eine Synchronisiereinrichtung in einem Schaltgetriebe dient dazu, die Drehzahldifferenz zwischen einem zu schaltenden Gang und der Getriebewelle abzubauen. Um hohe Reibmomente übertragen zu können sind Synchronisiereinrichtungen häufig als Mehrfachkonus-Synchronisierung ausgebildet. Eine solche Synchronisiereinrichtung weist im Wesentlichen die folgende Teile auf: Eine Schiebemuffe, einen Muffenträger, einen äußeren Synchronring, einen Zwischenring, einen inneren Synchronring und ein Gangrad. Dabei werden der äußere Synchronring, der Zwischenring und der innere Synchronring zusammen als Synchronringpaket bezeichnet.

Für herkömmliche Schaltgetriebe werden der äußere und der innere Synchronring aus einem Messingwerkstoff und der Zwischenring aus einem Stahlwerkstoff gefertigt. Ein solches Synchronringpaket ist beispielsweise aus der EP 1 429 044 A1 bekannt. Ein derartig aufgebautes Synchronringpaket besitzt jedoch nicht die erforderliche Festigkeit, um den angreifenden hohen Schaltkräften und den auftretenden hohen Reibbelastungen zu widerstehen, wie sie in hoch belasteten Getrieben auftreten. Diese hohen Belastungen treten insbesondere bei modernen automatisierten Schaltgetrieben, in Folge der vorherrschenden kurzen Schaltzeiten, auf.

Weiter ist aus der DE 101 63 828 A1 eine Synchronisiereinrichtung bekannt, wobei ein Kupplungskörper über einen Konusring mit einem Synchronaußenring eine Reibpaarung bildet. Zur Erhöhung der Festigkeit des Verzahnungsbereichs ist vorgeschlagen, den Kupplungskörper und den Synchronaußenring aus Stahl zu fertigen. Um eine gewünscht unterschiedliche Werkstoffpaarung zu erhalten, ist der mit dem Kupplungskörper verbundene Konusring entweder vollständig aus Messing hergestellt oder weist eine Reibfläche aus Messing auf.

Die erforderliche Festigkeit der Synchronringe für Synchronisiereinrichtungen in solch hoch belasteten Getrieben wird bislang dadurch erzielt, dass neben dem Zwischenring sowohl der innere Synchronring, als auch der äußere Synchronring aus Stahl gefertigt werden. Da eine Stahl-Stahl-Reibpaarung jedoch kein akzeptables Reibverhalten aufweist, ist es erforderlich, auf zumindest eine der Reibflächen einer Reibpaarung eine zusätzliche Reibschicht, beispielsweise eine thermisch gespritzte Molybdänschicht, eine Sinterschicht oder eine Carbonreibschicht, aufzubringen. Dies erfordert einen zusätzlichen Herstellungsschritt zu der ohnehin aufwändigen und teure Werkzeuge erfordernden Herstellung von Stahlsynchronringen. Der Einsatz von Synchronringpaketen mit drei Stahlringen führt häufig zu thermischen Problemen. Denn die Umwandlung der auftretenden hohen Reibenergien in thermische Energie führt zu einer starken Erhitzung der Synchronringe. Dies gilt besonders für den inneren Synchronring, da dieser infolge seiner Abschirmung durch den Außen- und den Zwischenring nur geringfügig von Getriebeöl umflossen wird. In Folge dessen findet eine Kühlung des inneren Synchronrings durch das Getriebeöl so gut wie nicht statt. Da die Wärmeleitfähigkeit von Stahl niedrig ist und somit auch ein Temperaturausgleich mittels Wärmeleitung über den Synchronring hinweg vernachlässigbar ist, kann es bei der auftretenden Überhitzung der inneren Synchronringe zur Zersetzung des Getriebeöls kommen. Die hohen Temperaturen im Inneren des Synchronringpaketes können auch den Reibbelag schädigen und im schlimmsten Fall zur Verschwei-βung des Innensynchronrings mit der Kontaktfläche auf dem Gangrad führen.

In Erkenntnis dieser Gegebenheiten liegt vorliegender Erfindung deshalb die Problemstellung zugrunde, ein Synchronringpaket bereitzustellen, wobei das Synchronringpaket einerseits hohe Schaltkräfte umsetzen kann und andererseits eine Überhitzung des inneren Synchronrings vermeidet, wobei der innere Synchronring gleichzeitig kostengünstig herstellbar sein soll.

Die Aufgabe wird erfindungsgemäß gelöst durch ein Synchronringpaket gemäß Patentanspruch 1.

In anderen Worten, es ist neben dem Zwischenring auch der äußere Synchronring einer Mehrfachkonus-Synchronisiereinrichtung für ein Schaltgetriebe aus einem Stahlwerkstoff gefertigt, wogegen der innere Synchronring aus einem Kupferwerkstoff gefertigt ist.

Ein derartig aufgebautes Synchronringpaket, dessen äußerer Synchronring aus einem anderen Material gefertigt ist als der innere Synchronring, setzt sich über in der Fachwelt bestehende Vorurteile hinweg. Denn bisher galt in Fachkreisen, dass der Innen- und der Außensynchronring einer Mehrfachkonus-Synchronisierung stets aus demselben Material bestehen müssen. Darüber hinaus ist davon ausgegangen worden, dass als Material für hoch belastete Getriebe, wie beispielsweise moderne, automatisierte Schaltgetriebe mit sehr kurzen Schaltzeiten, ausschließlich Stahl verwendbar wäre, da nur durch den Einsatz von Stahl die erforderliche Festigkeit erreichbar ist.

Überraschenderweise hat sich nun gezeigt, dass durch die Kombination eines äußeren Synchronrings aus Stahl mit einem inneren Synchronring aus einem Kupferwerkstoff unter Beibehaltung des bekannten Zwischenringes aus Stahl nicht nur die gleichen, sondern sogar höhere Belastungen als bei einem ausschließlich aus Stahlringen bestehenden Synchronpaket bewältigt werden können.

Für die sichere Funktion eines äußeren Synchronrings, der in einem hoch belasteten Getriebe einsetzbar sein soll, ist es essentiell, dass dieser Synchronring eine hohe Festigkeit, eine hohe Härte und ein hohes E-Modul aufweist, um die einwirkenden hohen Schaltkräfte aufnehmen zu können und um eine genügend hohe Verschleißbeständigkeit der Sperrzähne zu gewährleisten.

Beim Innensynchronring führt die axiale Anpresskraft beim Schalten im Gegensatz zum Außensynchronring zu einer Druckbelastung. Zugspannungen treten nur in Umfangsrichtung als Folge des angreifenden Reibmomentes auf. Dadurch ist für den Innenring nicht die ausgesprochen hohe Festigkeit des Außenringes erforderlich. Es hat sich nun überraschend gezeigt, dass hochfeste Kupferlegierungen diese erniedrigten Festigkeitsanforderungen für den Innensynchronring erfüllen können.

Kupferwerkstoffe besitzen darüber hinaus vorteilhafte Eigenschaften, die Stahl in dieser Form nicht aufweist. So ist die Wärmeleitfähigkeit von geeigneten Kupferwerkstoffen gegenüber der von Stahl deutlich erhöht. Infolge der hohen Wärmeleitfähigkeit gewährleisten Kupferwerkstoffe, dass, trotz eines vernachlässigbaren Austauschs des Getriebeöls im Bereich des Innensynchronrings und der damit einhergehenden nur geringfügigen Wärmeabfuhr durch das Getriebeöl, ein ausreichender Temperaturausgleich über den inneren Synchronring hinweg mittels Wärmeleitung stattfindet. Somit können die beschriebenen nachteiligen Effekte bei inneren Synchronringen aus Stahl in Synchronisiereinrichtungen vermieden werden.

Gemäß der Erfindung ist der innere Synchronring aus einer Sondermessing-Legierung oder aus einer Aluminium-Bronze-Legierung oder aus einer Kupfer-Kobalt-Legierung gefertigt.

Bei den beanspruchten Legierungstypen handelt es sich um Kupferwerkstoffe, die neben einer guten Wärmeleitfähigkeit auch eine hohe Festigkeit sowie eine hohe Verschleißbeständigkeit aufweisen.

Gleichzeitig bieten die genannten Kupferlegierungen den Vorteil, dass Innensynchronringe aus derartigen Kupferlegierungen mittels Schmieden auch in kleineren Stückzahlen kostengünstig und wirtschaftlich herstellbar sind.

In einer weiteren Ausführungsform weist der innere Synchronring wenigstens eine Reibfläche auf, die reibschichtfrei ausgebildet ist.

Neben den bereits erwähnten vorteilhaften Materialeigenschaften von Kupferwerkstoffen weisen diese auch sehr gute Reibeigenschaften verbunden mit einer hohen Verschleißbeständigkeit auf. In nutzbringender Weise kann deshalb im Gegensatz zu den bisher verwendeten Innensynchronringen aus Stahl in vielen Anwendungsfällen auf die Anbringung einer zusätzlichen Reibschicht auf wenigstens einer Reibfläche eines inneren Synchronrings verzichtet werden, wodurch die Herstellung weiter vereinfacht und kostengünstiger ist.

In einer bevorzugten Alternative weist der innere Synchronring eine äußere Reibfläche auf, die mit einem Reibgewinde oder mit einer Reibschicht ausgebildet ist.

Bei einer 2-fach-Synchronisierung steht der innere Synchronring nicht mit dem Gangrad in einer Reibverbindung, weshalb nur die äußere Reibfläche mit einem Reibgewinde oder mit einer Reibschicht ausgebildet ist. Durch die optionale Anbringung eines Reibgewindes, darunter werden bevorzugt gewindeähnlich angeordnete Nuten verstanden, oder einer Reibschicht, ist es möglich, auf besondere Anforderungen der Reibpartner einzugehen bzw. konkrete Reibverhältnisse einzustellen und so die Reibpartner optimal aufeinander abzustimmen.

Vorteilhafterweise kann der innere Synchronring so ausgebildet sein, dass er eine äußere und eine innere Reibfläche aufweist, die mit einem Reibgewinde oder mit einer Reibschicht versehen ist.

Bei einer 3-fach-Synchronisierung steht der innere Synchronring auch mit dem Gangrad in einer Reibverbindung, weshalb sowohl die innere als auch die äußere Reibfläche entweder mit einem Reibgewinde oder mit einer Reibschicht ausgebildet ist. Durch die optionale Anbringung eines Reibgewindes oder einer Reibschicht, ist es möglich, auf besondere Anforderungen der Reibpartner einzugehen bzw. konkrete Reibverhältnisse einzustellen und so die Reibpartner optimal aufeinander abzustimmen.

Ein Ausführungsbeispiel wird anhand der Zeichnung und anhand der nachstehenden Beschreibung näher erläutert. Dabei zeigt:
Fig. 1: Eine Mehrfach-Synchronisiereinrichtung mit deren wesentlichen Teilen.
Fig. 2: Ein zusammengestecktes Synchronringpaket.
Fig. 3: Einen Querschnitt durch ein Synchronringpaket.

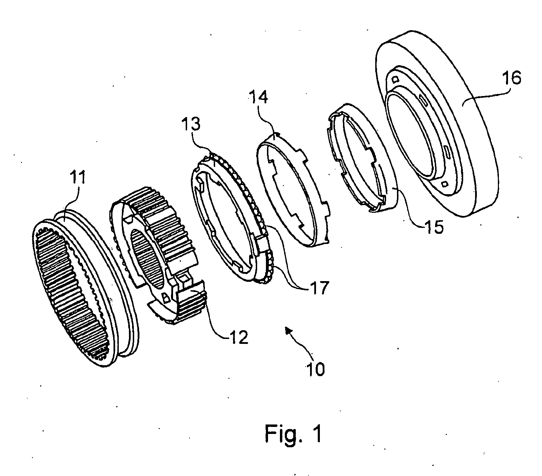

Figur 1 zeigt in Form einer schematischen Explosionszeichnung die wesentlichen Teile einer Synchronisiereinrichtung 10. Es handelt sich hierbei um eine Schiebemuffe 11, eine Nabe oder einen Muffenträger 12, einen äußeren Synchronring 13, einen Zwischenring 14, einen inneren Synchronring 15 und um ein Gang- oder Losrad 16. Am Außenring 13 befinden sich Sperrzähne 17, an denen beim Synchronisiervorgang Zugkräfte angreifen. Im Gegensatz dazu ist der Innenring 15 ohne Sperrzähne ausgebildet. Während des Synchronisiervorgangs, also in montiertem Zustand, sind die Teile 11 - 16 der Synchronisiereinrichtung 10 übereinander geschoben. Der Zwischenring 14 und der Außenring 13 sind über den Innenring 15 geschoben und umschließen den Innenring 15 weitgehend. In Folge dieses Umschließens ist ein Austausch des Getriebeöls an der Oberfläche des Innenrings 15 weitestgehend ausgeschlossen. Es käme also zu einem Wärmestau, sofern der Innenring 15 aus Stahl gefertigt wäre und nicht wie beansprucht aus einem Kupferwerkstoff, der die entstehende Wärme von der Oberfläche des Innenrings 15 mittels seiner exzellenten Wärmeleitfähigkeit über den Synchronring abführen würde.

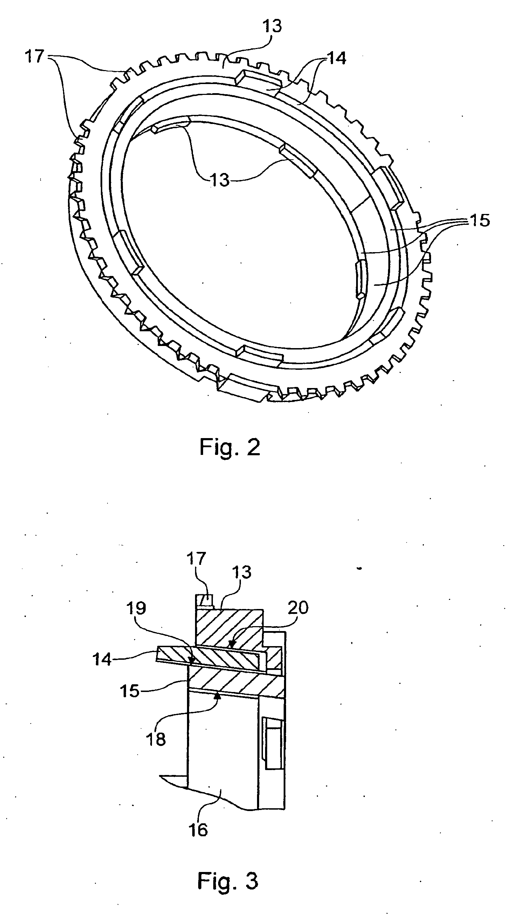

Figur 2 zeigt in einer räumlichen Darstellung ein zusammengesetztes Synchronpaket aus äußerem Synchronring 13, Zwischenring 14 und innerem Synchronring 15 für eine 3-fach-Synchronisierung.

Figur 3 zeigt im Schnitt das zusammengesetzte Synchronringpaket aus äußerem Synchronring 13, Zwischenring 14 und innerem Synchronring 15 für eine 3-fach-Synchronisierung. Die Reibfläche 20 des äußeren Synchronrings 13 bildet mit der einen Seite des Zwischenrings 14 eine Reibpaarung. Die andere Seite des Zwischenrings 14 bildet eine Reibpaarung mit der äußeren Reibfläche 19 des Innenrings 15. Die innere Reibfläche 18 des Innenrings 15 bildet eine Reibpaarung mit dem Gangrad 16. Figur 3 macht die beengten Verhältnisse im zusammengebauten Zustand und die stark eingeschränkten Möglichkeiten für den Austausch des Getriebeöls deutlich.

Im Falle einer 2-fach-Synchronisierung liegt keine Reibpaarung aus innerer Reibfläche 18 des Innenrings 15 und Gangrad 16 vor.

Tabelle 1 gibt die Werte der Wärmeleitfähigkeit sowie die Werte der Festigkeit für die beanspruchten Legierungen, wie eine Aluminium-Bronze, eine Kupfer-Kobalt-Legierung und ein Sondermessing, und eine nicht beanspruchte Kupfer-Nickel-Legierung an.

| Legierung | Wärmeleitfähigkeit (W/mK) | Zugfestigkeit Rm (N/mm²) |
|---|---|---|
| | | |
| CuAl8Fe3 | 80 | 700 |
| CuNi2Si | 160 | 500 |
| CuCo2Be | 220 | 650 |
| CuZn31Ni7Al4Si2Fe | 70 | 830 |

Die Wärmeleitfähigkeit von gängigen Synchronringstählen liegt im Vergleich dazu bei ≤ 40 W/mK.

## Patentansprüche

1. Synchronringpaket für ein Schaltgetriebe umfassend einen äußeren Synchronring (13), einen Zwischenring (14) und einen inneren Synchronring (15),
wobei
der äußere Synchronring (13) aus einem Stahlwerkstoff, der Zwischenring (14) aus einem Stahlwerkstoff und der innere Synchronring (15) aus einem Kupferwerkstoff gefertigt ist,
wobei der innere Synchronring aus der Aluminium-Bronze CuAl8Fe3 mit einer Wärmeleitfähigkeit von 80 W/mK und einer Zugfestigkeit von 700 N/mm², der Kupfer-Kobalt-Legierung CuCo2Be mit einer Wärmeleitfähigkeit von 220 W/mK und einer Zugfestigkeit von 650 N/mm² oder dem Sondermessing CuZn31Ni7Al4Si2Fe mit einer Wärmeleitfähigkeit von 70 W/mK und einer Zugfestigkeit von 830 N/mm² hergestellt ist.

2. Synchronringpaket nach einem der vorhergehenden Ansprüche,
**dadurch gekennzeichnet, dass**
der innere Synchronring (15) wenigstens eine Reibfläche aufweist, die reibschichtfrei ausgebildet ist.

3. Synchronringpaket nach Anspruch 1
**dadurch gekennzeichnet, dass**
der innere Synchronring (15) eine äußere Reibfläche aufweist, die mit einem Reibgewinde oder mit einer Reibschicht
ausgebildet ist.

4. Synchronringpaket nach Anspruch 1,
**dadurch gekennzeichnet, dass**
der innere Synchronring (15) eine äußere und eine innere Reibfläche aufweist, die mit einem Reibgewinde oder mit
einer Reibschicht ausgebildet ist.

## Claims

1. Synchronizer ring assembly for a gear-shift transmission, comprising an outer synchronizer ring (13), an intermediate ring (14) and an inner synchronizer ring (15), wherein the outer synchronizer ring (13) is manufactured from a steel material, the intermediate ring (14) from a steel material and the inner synchronizer ring (15) from a copper material, wherein the inner synchronizer ring (15) is manufactured from the aluminium/bronze CuAl8Fe3 with a thermal conductivity of 80 W/mK and a tensile strength of 700 N/mm², the copper/cobalt alloy CuCo2Be with a thermal conductivity of 220 W/mK and a tensile strength of 650 N/mm² or the special brass CuZn31Ni7A14Si2Fe with a thermal conductivity of 70 W/mK and a tensile strength of 830 N/mm².

2. Synchronizer ring assembly according to one of the preceding claims, **characterized in that** the inner synchronizer ring (15) has at least one friction surface which is designed to be free of a frictional layer.

3. Synchronizer ring assembly according to Claim 1, **characterized in that** the inner synchronizer ring (15) has an outer friction surface which is designed with a frictional thread or with a frictional layer.

4. Synchronizer ring assembly according to Claim 1, **characterized in that** the inner synchronizer ring (15) has an outer and an inner friction surface designed with a frictional thread or with a frictional layer.

## Revendications

1. Ensemble de bague de synchronisation pour un mécanisme de changement de vitesse, comprenant une bague de synchronisation externe (13), une bague intermédiaire (14) et une bague de synchronisation interne (15), dans lequel la bague de synchronisation externe (13) est fabriquée en un matériau d'acier, la bague intermédiaire (14) en un matériau d'acier et la bague de synchronisation interne (15) en un matériau de cuivre, dans lequel la bague de synchronisation interne (15) est fabriquée en le bronze d'aluminium CuA18Fe3 avec une conductivité thermique de 80 W/mK et une résistance à la traction de 700 N/mm², l'alliage cuivre-cobalt CuC02Be avec une conductivité thermique de 220 W/mK et une résistance à la traction de 650 N/mm² ou le laiton spécial CuZn31Ni7Al4Si2Fe avec une conductivité thermique de 70 W/mK et une résistance à la traction de 830 N/mm².

2. Ensemble de bague de synchronisation selon l'une quelconque des revendications précédentes, **caractérisé en ce que** la bague de synchronisation interne (15) présente au moins une surface de friction, qui est réalisée sans couche de friction.

3. Ensemble de bague de synchronisation selon la revendication 1, **caractérisé en ce que** la bague de synchronisation interne (15) présente une surface de friction externe, qui est réalisée avec un filetage de friction ou avec une couche de friction.

4. Ensemble de bague de synchronisation selon la revendication 1, **caractérisé en ce que** la bague de synchronisation interne (15) présente une surface de friction externe et une surface de friction interne, qui est réalisée avec un filetage de friction ou avec une couche de friction.
